# EUROPÄISCHE PATENTSCHRIFT

(11) **EP 1 169 128 B1**
(45) Veröffentlichungstag und Bekanntmachung des Hinweises auf die Patenterteilung: **15.06.2005**
(21) Anmeldenummer: 00922433.8
(22) Anmeldetag: 15.03.2000
(51) Int. Cl.: B01J 37/02, B01J 33/00, G21C 19/317, G21C 9/06, C01B 5/00, B01J 12/00, B01J 35/10

(54) **SICHERHEITSBEHÄLTER EINER KERNKRAFTANLAGE MIT KATALYTISCHEM ELEMENT**
CONTAINMENT OF A NUCLEAR POWER PLANT WITH A CATALYTIC ELEMENT
ENCEINTE DE CONFINEMENT D'UNE CENTRALE NUCLEAIRE AVEC UN ELEMENT CATALYTIQUE

(30) Priorität: 31.03.1999 DE 19914823
(43) Veröffentlichungstag der Anmeldung: 09.01.2002
(73) Patentinhaber: Framatome ANP GmbH, 91058 Erlangen (DE); ENGELHARD CORPORATION, Iselin, New Jersey 08830-0770 (US)
(72) Erfinder: ECKARDT, Bernd, D-63486 Bruchköbel (DE); BERNDT, Malte, D-74889 Sinsheim (DE)
(74) Vertreter: Tergau, Dietrich, Dipl.-Ing.
(86) Internationale Anmeldenummer: PCT/DE2000/000797
(87) Internationale Veröffentlichungsnummer: WO 2000/059634

(56) Entgegenhaltungen:
- EP-A- 0 945 178
- DE-A- 3 729 114
- DE-A- 19 636 557
- US-A- 4 078 893
- US-A- 5 035 875

## Beschreibung

Die Erfindung bezieht sich auf Sicherheitsbehälter einer Kernkraftanlage einen Sicherheitsbehälter einer Kernkraftanlage mit einer Anzahl von katalytischen Elementen zur Rekombination von Wasserstoff mit Sauerstoff des Reaktionsgase mit jeweils einem Katalysatorkörper mit einer katalytischen Oberfläche.

Eine ähnliche Thematik ist in der gleichzeitig eingereichten Anmeldung mit dem Titel "Rekombinationseinrichtung und Verfahren zur katalytischen Rekombination von Wasserstoff und/oder Kohlenmonoxid mit Sauerstoff" behandelt, deren Offenbarungsgehalt dieser Anmeldung zuzurechnen ist.

Nach einem Störfall mit Kühlmittelverlust können in einem Kernkraftwerk große Mengen Wasserstoff und Kohlenmonoxid in Sicherheitsbehälter (Containment) freigesetzt werden. Ohne Gegenmaßnahme kann Wasserstoff in der Atmosphäre des Sicherheitsbehälters so weit angereichert werden, daß sich ein detonationsfähiges Gemisch ausbilden kann. Bei einer zufälligen Zündung könnte vor allem durch die Verbrennung einer größeren Menge an Wasserstoff die Integrität des Sicherheitsbehälters gefährdet werden.

Um derartige explosive Gasgemische im Sicherheitsbehälter zu verhindern, werden verschiedene Einrichtungen diskutiert. Hierzu gehören beispielsweise Einrichtungen wie katalytische Rekombinatoren, katalytisch und elektrisch betriebenen Zündeinrichtungen oder die Kombination der beiden vorgenannten Einrichtungen.

Zur Beseitigung des Wasserstoffs und des Kohlenmonoxids aus der Atmosphäre des Sicherheitsbehälters (Containment-Atmosphäre) soll insbesondere eine frühzeitige und flammenlose Rekombination des Wasserstoffs und/oder des Kohlenmonoxids mit Sauerstoff erreicht werden. Dabei soll ein signifikanter Druckaufbau als Folge einer virulenten Wasserstoffverbrennung sicher vermieden sein. Eine dazu geeignete früh startende Rekombinationseinrichtung, die auch bei längerer Standzeit in der Containment-Atmosphäre nicht wesentlich an Aktivität verliert und bei niedrigen Umgebungstemperaturen passiv startet, ist aus der Deutschen Patentanmeldung 196 36 557 bekannt. Mit einer derartigen Rekombinationseinrichtung ist eine "sanfte" Rekombination des Wasserstoffs, z.B. in einer Phase der Containment-Atmosphäre, möglich, die einen Dampf enthält und daher gegen spontane Entzündung geschützt ist.

Aus der EP 0 527 968 B1 ist eine Rekombinationseinrichtung bekannt, bei der eine Anzahl von Katalysatorsystemen in Form von ebenen Platten, die beidseitig mit Katalysatormaterial wie Platin und/oder Palladium beschichtet sind, vorgesehen ist. Diese eignet sich besonders gut für den Wasserstoffabbau in der Atmosphäre des Sicherheitsbehälters eines Kernkraftwerks. Jedes Katalysatorsystem umfaßt dabei ein Trägerblech aus Edelstahl, das beidseitig eine dünne Schicht, deren Dicke im Mikrometerbereich liegt, aus insbesondere Platin und/oder Palladium aufweist. Eine Vielzahl solcher beschichteter Einzelplatten ist in einem Gehäuse, das als Modul aufgebaut sein kann, angeordnet. Das Gehäuse wird von unten mit dem zu überwachenden Gasstrom beströmt, und dieser Gasstrom verläßt das Gehäuse im oberen Bereich durch eine seitlich angebrachte Austrittsöffnung.

Aus der EP 0 436 942 A1 ist ein Rekombinatorsystem mit einer Gehäuseschutzeinrichtung bekannt, die sich in Abhängigkeit von einer äußeren Temperatur selsttätig öffnet. In einem Bereitschaftszustand des Rekombinationssystems ist die Gehäuseschutzeinrichtung hingegen geschlossen, so daß eine Verschmutzung der katalytisch aktiven Oberfläche des Rekombinators vermieden ist.

Bei einer aus der EP 0 416 140 A1 bekannten Rekombinatoreinrichtung hingegen sind Filtermedien vorgesehen, die Schadstoffe aus der Umgebungsatmosphäre, wie beispielsweise Aerosole, zurückhalten und somit den Katalysator der Rekombinationseinrichtung gegen Verunreinigung schützen.

Weiterhin sind aus der Deutschen Patentanmeldung DE 37 25 290 Edelmetall-Legierungen bekannt, welche über ein Trägerblech oder Metallnetz die bei der Rekombination entstehende Reaktionswärme aufnehmen oder ableiten, wodurch eine Zündung des Gasgemisches vermieden werden soll.

Aus der EP 0 388 955 A1 ist eine Rekombinatoreinrichtung bekannt, bei der zusätzlich eine Zündvorrichtung zur Auslösung einer kontrollierten Wasserstoffverbrennung vorgesehen ist.

Jedes bekannte Rekombinatorsystem ist für eine besonders hohe Rekombinatorleistung bei besonders geringen Komponentenabmessungen sowie für eine hohe Resistenz gegenüber Verunreinigung ausgelegt. Für den Einsatz einer Vorrichtung zur Rekombination von Wasserstoff in einem Gasgemisch in einem Kernkraftwerk ist darüber hinaus aber auch sicherzustellen, daß keine die Sicherheit des Kernkraftwerks negativ beeinflussenden Effekte auftreten können. Es ist zu berücksichtigen, daß ein zur Rekombination des Wasserstoffs eingesetztes katalytisches Element (Katalysatoranordnung) sich in Folge der Rekombination üblicherweise erwärmt und aufgrund seiner erhöhten Temperatur zur Zündung des Gasgemisches innerhalb der Containment-Atmosphäre des Kernkraftwerks in ungewollter Weise beitragen könnte.

Der Erfindung liegt daher die Aufgabe zugrunde, einen Sicherheitsbehälter einer Kernkraftanlage der oben genannten Art anzugeben, bei dessen Betrieb eine ungewollte Zündung des Gasgemischs besonders sicher vermieden ist.

Diese Aufgabe wird erfindungsgemäß dadurch gelöst, daß bei oder jedem dem katalytischen Element eine auf der katalytischen Oberfläche angebrachte keramische, mineralische oder metallische Drosselschicht zur Hemmung der Diffusion der zuund/oder abströmenden Reaktionsgase vorgesehen ist.

Die Erfindung geht dabei von der Überlegung aus, daß eine ungewollte Zündung des Gasgemischs in der Umgebung des katalytischen Elements durch eine erhöhte Reaktionstemperatur am katalytischen Element selbst erzeugt werden kann, so daß hierdurch eine bei der Rekombination erzeugte und aus dem katalytischen Element in die Umgebung austretende Flamme ausgelöst werden könnte. Um dies sicher zu vermeiden, sollte das katalytische Element derart ausgelegt sein, daß die Reaktionstemperatur unterhalb der Zündtemperatur des Gasgemischs liegt. Dies sollte insbesondere auch für ein derartiges Gasgemisch ermöglicht sein, dessen H₂-Gehalt mehr als 8 Vol.% beträgt. Dazu ist zusätzlich die diffusionshemmende Drosselschicht vorgesehen, die besonders einfach eine Drosselung der Zu- und/oder Abströmung der Reaktionsgase ermöglicht, wodurch nur eine dynamische Adsorption der Reaktionsgase und somit eine Begrenzung der katalytischen Reaktion auf geringe Teilmengen pro Flächeneinheit stattfindet. Dies wiederum führt bevorzugt zu einer Begrenzung der Reaktionstemperatur, wodurch die Zündtemperatur des Gasgemischs unterschritten bleibt. Darüber hinaus ist bei Anfall von hochkontaminierter Atmosphäre eine besonders hohe Rückhaltung und Sorption von dabei auftretenden Katalysatorgiften, wie z.B. Aerosolen, bewirkt, wodurch die katalytisch aktive Oberfläche des Katalysatarkörpers gegen Verunreinigung geschützt ist.

Insbesondere kann die Drosselschicht porös mit einem mittleren Porendurchmesser von mindestens 5 Angström, vorzugsweise von mindestens 100 Angström und von höchstens 10000 Angström, ausgebildet sein. Dabei umfaßt die Drossel- oder Porenschicht beispielsweise, insbesondere im Zuströmbereich des Gasgemischs, sogenannte Makroporen mit einem mittleren Porendurchmesser bis 10000 Angström. Dies ermöglicht eine besonders gute Zu- und/oder Abführung der Reaktionsgase. Die tieferliegenden und somit nahe zum Katalysatorkörper hin angeordneten Ebenen der Drosselschicht können kleinere Poren, sogenannte Mikroporen mit einem Porendurchmesser von 5 Angström, insbesondere von mindestens 100 Angström umfassen. Hierdurch ist eine Diffusionssperre für die Reaktionsgase gegeben. Beim Betrieb oder auch Stillstand des katalytischen Elements kann es darüber hinaus zur Ablösung von Partikeln des Katalysatorkörpers kommen. Durch die Feinporigkeit der Drosselschicht ist ein Austragen der sogenannten "vagabundierenden" heißen Katalysatorpartikel, die ebenfalls zu einer Zündung des den Katalysatorkörper umgebenden Gasgemischs beitragen können, besonders sicher vermieden.

Die Drosselschicht kann eine Porenvolumen von mindestens 0,1 cm³/g und höchstens 1 cm³/g aufweisen. Besonders eignet sich Washcoat (Al₂O₃) mit einem besonders geringen Porenvolumen. Hierdurch ist eine besonders gute Diffusionssperre bei gleichzeitig großer Oberfläche erzielt. Darüber hinaus ist eine Rückhaltung von Katalysatorgiften ermöglicht.

Vorzugsweise weist die Drosselschicht eine Schichtdicke von mindestens 10 µm und höchstens 1 mm auf. In besonders vorteilhafter Ausgestaltung weist die Drosselschicht in Strömungsrichtung des Gasgemisches eine variierende Schichtdicke und/oder einen variierenden Porendurchmesser auf. Hierbei ist insbesondere im Einströmbereich des Gasgemischs bei üblichen Strömungsgeschwindigkeiten von 0,1 bis 2 m/s die Drosselschicht mit einer besonders großen Schichtdicke oder bei gleicher Schichtdicke mit besonders kleinem Porendurchmesser aufgebracht. Dies bewirkt eine gegenüber dem Abströmbereich höhere dynamische Adsorption mit geringerer Zu- und Abströmung der Reaktionsgase, wodurch die katalytische Reaktion gedrosselt wird. Darüber hinaus wird eine besonders hohe Rückhaltung von Katalysatorgiften erzielt. Bevorzugt variiert die Schichtdicke der Drosselschicht dabei in Strömungsrichtung des Gasgemischs entlang des Katalysatorkörpers. Alternativ und/oder zusätzlich kann die Drosselschicht in Strömungsrichtung des Gasgemischs durch die Drosselschicht einen variierenden Porendurchmesser aufweisen.

Vorzugsweise ist die Drosselschicht keramisch. Die keramische Drosselschicht ist dabei zweckmäßigerweise porös und weist eine Schichtdicke von höchstens 500 µm auf. Bevorzugt umfaßt die keramische Drosselschicht Aluminiumoxid oder Siliziumoxid. Alternativ kann auch ein anderes oxidkeramisches Material, z.B. Zirconiumoxid, Titandioxid, oder Gemische, wie z.B. Cordierite, Mullite, Zeolithe, etc. verwendet werden.

Alternativ ist vorgesehen, daß die Drosselschicht mineralisch ist. Die mineralische Drosselschicht ist bevorzugt porös und weist eine Schichtdicke von mindestens 1 mm auf. Besonders vorteilhaft ist die mineralische Drosselschicht aus einer mineralischen Schüttung, insbesondere aus einer Basaltbruchschüttung, mit einer mittleren Korngröße von mindestens 0,3 mm und von höchstens 5 mm gebildet. Durch eine derartige Schüttung ist eine besonders gute Wärmeleitung und -aufnahme ermöglicht.

Bei einer weiteren Ausgestaltung ist die Drosselschicht metallisch. Dabei weist die metallische Drosselschicht bevorzugt einen mittleren Porendurchmesser von höchstens 50 µm auf. Vorzugsweise umfaßt die metallische Drosselschicht eine durchlässige Metallfolie. Die metallische Drosselschicht kann hierbei ein- oder mehrlagig sein.

Zur Vergleichmäßigung der Temperatur und somit zur Vermeidung von lokalen Zentren mit erhöhten Reaktionsraten und -temperatur umfaßt die Drosselschicht zweckmäßigerweise metallische oder keramische Fasern. Dabei sind die Fasern bevorzugt netzartig angeordnet und weisen vorzugsweise einen Durchmesser von höchstens 1 mm sowie einen mittleren Abstand von höchstens 2 mm auf. Beispielsweise kann die Drosselschicht als einlagiges Siebblech oder auch mehrlagige Sieb- oder Faseranordnung ausgebildet sein. Insbesondere durch die Anordnung eines metallischen oder keramischen Gitters in der porösen oder geschütteten Drosselschicht wird eine besonders hohe Schlag- und Abriebfestigkeit im Hinblick auf die Vermeidung von katalytischen Abrieb des Katalysatorkörpers erreicht.

Dabei können die verschiedenen Drosselschichten durch verschiedene Herstellungsverfahren auf den Katalysatorkörper aufgebracht werden. Beispielsweise kann die Drosselschicht wie Lack auf den Katalysatorkörper aufgesprüht werden, wodurch eine besonders genaue Dimensionierung der Schichtdicke der Drosselschicht ermöglicht ist. Alternativ kann die Drosselschicht durch Eintauchen oder Bepinseln des Katalysatorkörpers oder durch Aufkleben aufgebracht werden.

Bevorzugt umfaßt der Katalysatorkörper ein Trägerblech, insbesondere aus einem nicht-rostenden Edelstahl. Dabei weist das Trägerblech eine Blechdicke von weniger oder gleich 0,2 mm auf. Alternativ umfaßt der Katalysatorkörper eine ebene Platte, eine perforierte Platte oder eine Kugel als mechanischen Träger. Je nach Funktion und Art der katalytischen Rekombination kann der mechanische Träger metallisch oder keramisch ausgeführt sein.

Für eine besonders effektive Rekombination des im Gasgemisch geführten Wasserstoffs enthält die katalytische Oberfläche ein katalytisches Edelmetall, insbesondere Platin oder Palladium. Bevorzugt ist die katalytische Oberfläche von einem mit Hilfe einer Haftvermittlerschicht und/oder einer Zwischenschicht auf einen mechanischen Träger aufgetragenen katalytisch aktiven Material, z.B. Platin, Palladium oder Kupfer, gebildet. Platin ist dabei besonders temperaturbeständig und resistent gegen Katalysatorgifte. Darüber hinaus kann mit Platin als katalytisch aktives Material neben Wasserstoff auch Kohlenmonoxid rekombiniert werden. Palladium eignet sich insbesondere, weil seine katalytische Eigenschaft bei besonders geringen Umgebungstemperaturen bereits anspricht.

Der Aufbau des katalytischen Elements mit dem Katalysatorkörper mit der katalytischen Oberfläche und der darauf angebrachten Drosselschicht erfolgt bevorzugt in seperaten Schichten als sogenannte Sändwichkonstruktion. Dabei werden die einzelnen Schichten mittels einer Klemme oder mittels eines u-förmigen Blechs aneinander gehalten. Die Klemme oder das Blech umschließt dabei das jeweilige Ende des katalytischen Elements, wodurch die Schichten des katalytischen Elements besonders sicher gehalten sind. Die Halterung des katalytischen Elements kann darüber hinaus beispielsweise in einem Siebkorb oder Einschub erfolgen. Hierdurch ist ein besonders einfacher Einbau in einer Rekombinationseinrichtung, die eine Mehrzahl von katalytischen Elementen umfaßt, ermöglicht.

Nach einer weiteren vorteilhaften Ausgestaltung ist mindestens im Einströmbereich eine Teflonbeschichtung auf der Drosselschicht vorgesehen. Die Frühstartfähigkeit, insbesondere bei feuchten Umgebungsbedingungen, kann durch eine solche örtlich begrenzte Teflonbeschichtung zur Erzeugung zeitweiliger hydrophober Eigenschaften des Katalysatorkörpers führen. Durch die quantitative Begrenzung der Teflonbeschichtung kann eine reaktionsrelevante Adsorption von Wasser innerhalb der Poren- oder Drosselschicht vermieden und somit eine Verbesserung der Frühstartfähigkeit (passiver Reaktionsstart) erzielt werden.

Die mit der Erfindung erzielten Vorteile bestehen insbesondere darin, daß durch eine auf der katalytischen Oberfläche angebrachten Drosselschicht bei entsprechender Schichtstärke oder Porendurchmesser eine katalytische Rekombination des Wasserstoffs mit Sauerstoff auch in hochexplosiver Atmosphäre, d.h. bei einem H2-Gehalr von ca. 15 Vol.% im Gasgemisch, ohne Auslösung einer Zündung ermöglicht ist. Dies ist insbesondere durch die Diffusionseigenschaften der Drosselschicht erzielt, die als Diffusionssperre für die Reaktionsgase eine Drosselung der katalytischen Reaktion wirkt. Katalytische Abreibungen oder Abplatzungen sind durch die auf der katalytischen Oberfläche angebrachten Drosselschicht sicher vermieden, da die Drosselschicht als Schutzschicht das katalytisch aktive Material abdeckt. Dies ist insbesondere auf die gute thermischen Leitfähigkeit und die besonders hohe Härte der Drosselschicht, die die äußere Schicht des katalytischen Elements bildet, zurückzuführen. Darüber hinaus ist neben der Diffusionshemmung durch die Drosselschicht die Ausbreitung einer in Folge der bei der Rekombination von Wasserstoff freigesetzten Wärme möglicherweise auftretenden Flamme sicher vermieden. Ferner wird durch eine Spaltweite von kleiner 0,3 mm ein besonders sicherer Flammensperreffekt erreicht.

Ausführungsbeispiele der Erfindung werden anhand einer Zeichnung näher erläutert. Darin zeigen:
- FIG 1: ein katalytisches Elements zur Rekombination von Wasserstoff in einem Gasgemisch mit einer Drosselschicht, und
- FIG 2 bis 4: einen Ausschnitt I aus Figur 1 mit vier Alternativen für die Drosselschicht.

Gleiche Teile sind in allen Figuren mit den gleichen Bezugszeichen versehen.

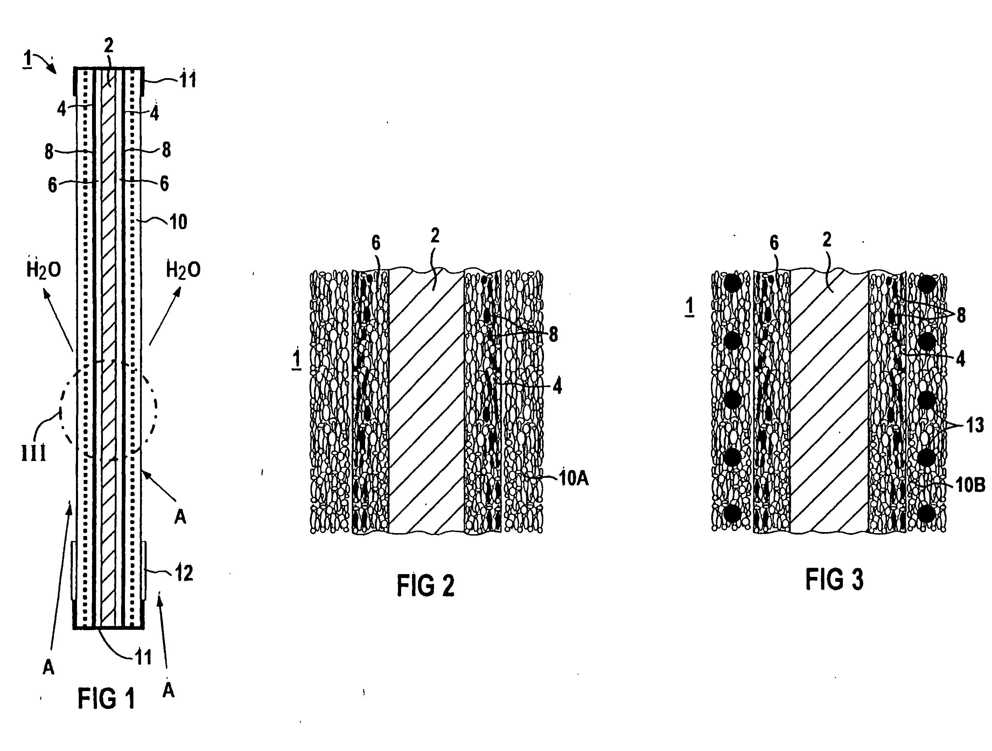

Das katalytische Element 1 gemäß Figur 1 ist zur Rekombination von Wasserstoff und/oder Kohlenmonoxid mit Sauerstoff in einem Gasgemisch, nämlich in der Containment-Atmosphäre einer nicht näher dargestellten Rekombinatoreinrichtung eines Kernkraftwerks bei einem Störfall, vorgesehen. Das katalytische Element 1 umfaßt dazu einen Katalysatorkörper 2 mit einer katalytischen Oberfläche 4. Als Katalysatorkörper 2 dient beispielsweise ein Trägerblech, insbesondere ein nicht-rostendes Edelstahl-Blech. Alternativ kann der Katalysatorkörper 2 als mechanischen Träger eine ebene Platte, eine perforierte Platte, eine Kugel oder eine Schüttung in einem plattenförmigen Tragewerk umfassen, wobei der mechanische Träger metallisch oder keramisch ist.

Die katalytische Oberfläche 4 ist dabei von einem mit Hilfe einer Zwischenschicht 6 auf dem Katalysatorkörper 2 aufgetragenen katalytischen Material 8 gebildet. Hierdurch ist bevorzugt die Oberfläche des Katalysatorkörpers 2 vergrößert. Die Zwischenschicht 6 ist beispielsweise mineralisch, insbesondere umfaßt die Zwischenschicht 6 Washcoat (Al₂O₃), in welchem das katalytische Material 8 unmittelbar an der Oberfläche 4 angeordnet ist. Die katalytische Oberfläche 4 umfaßt insbesondere als katalytisch aktives Material 8 ein katalytisches Edelmetall oder eine Mischung aus Edelmetallen oder auch eine Anordnung von Edelmetallfolien. Als Edelmetall sind insbesondere Platin oder Palladium vorgesehen.

Darüber hinaus ist auf der katalytischen Oberfläche 4 eine Drosselschicht 10 zur Hemmung der zu- und/oder abströmenden Reaktionsgase, z.B. H₂, O₂, CO, CO₂, H₂O, angebracht. Die Drosselschicht 10 ist porös. Der Porendurchmesser beträgt im Anströmbereich A der Drosselschicht 10 und somit unmittelbar im äußeren Bereich des katalytischen Elements 1 höchstens 10000 Angström. Diese im äußeren Bereich angeordneten Poren werden daher als Makroporen bezeichnet. Die tieferliegenden Ebenen der Drosselschicht 10, die in unmittelbarer Nähe zum Katalysatorkörper 2, insbesondere im Bereich der katalytischen Oberfläche 4, angeordnet sind, weisen einen kleineren Porendurchmesser von mindestens 5 Angström, vorzugsweise mindestens 100 Angström, auf. Diese tieferliegenden Poren werden daher auch als Mikroporen bezeichnet und bewirken die besonders diffusionshemmende Eigenschaft der Drosselschicht 10.

In Abhängigkeit von der zu erzielenden diffusionshemmenden Eigenschaft kann die Drosselschichc 10 eine in Strömungsrichtung des Gasgemischs entlang des Katalysatorkörpers 2 variierende Schichtdicke und/oder einen in Strömungsrichtung des Gasgemischs durch die Drosselschicht 10 variierenden Porendurchmesser aufweisen. Das Porenvolumen der Drosselschicht 10 beträgt mindestens 0,1 cm³/g und höchstens 1 cm³/g.

Zum sicheren Halben der teilweise als Schicht oder Lage ausgeführten Komponenten des katalytischen Elements 1 - Trägerblech 2, katalytische Oberfläche 4, Zwischenschicht 6, Drosselschicht 10 - ist jeweils auf dem oberen und unteren Ende des katalytischen Elements 1 eine Halterung 11 angeordnet. Als Halterung 11 dient beispielsweise eine Klemme oder ein u-förmiges Blech.

Zur Vermeidung von einer reaktionsrelevanten Adsorption von Wasser innerhalb der Drosselschicht 10 ist diese zumindest im Einströmbereich, d.h. am unteren Ende des katalytischen Elements 1, von einer hydrophob wirkenden, vorzugsweise durchlässigen Lage 12 umgeben. Als hydrophob wirkende Lage 12 dient insbesondere eine Teflonbeschichtung oder eine Beschichtung mit einem anderen hydrophop wirkenden Stoff.

In der Figur 2 ist ein Ausschnitt I gemäß Figur 1 des katalytischen Element 1 mit einer alternativen Drosselschicht 10A dargestellt. Die Drosselschicht 10A ist keramisch und umfaßt z.B. Washcoat oder Siliziumoxid. Die keramische Drosselschicht 10A ist dabei besonders porös und besitzt eine Schichtdicke von höchstens 500 µm.

Die Figur 3 zeigt eine weitere alternative Ausführungsform der Drosselschicht 10B des katalytischen Elements 1. Bei der Drosselschicht 10B handelt es sich ebenfalls um eine keramische Schicht, in welcher ein Netz 13 angeordnet ist. Das Netz 13 ist dabei aus metallischen oder keramischen Fasern, z.B. Edelstahl- bzw. Glasfasergewebe gebildet. Die Fasern weisen vorzugsweise einen Durchmesser von höchstens 1 mm sowie einen mittleren Abstand von höchstens 2 mm auf. Alternativ kann auch ein Lochblech oder ein Drahtgitter vorgesehen sein.
Durch die Anordnung des Netzes 13 in der Drosselschicht 10B ist diese besonders temperaturfest und abriebfest ausgeführt.

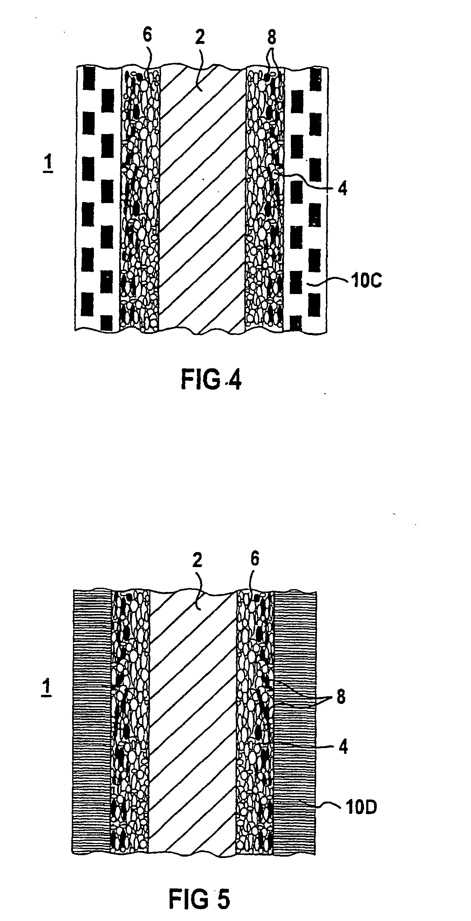

Im Ausführungsbeispiel gemäß Figur 4 ist das katalytische Element 1 mit einer weiteren alternativen Drosselschicht 10C dargestellt, die metallisch ist. Die metallische Drosselschicht 10C umfaßt dabei eine feinporige Metallfolie 14, die zweilagig ausgeführt ist. Als feinporige Metallfolie 14 dient beispielsweise ein Metallfasergewebe oder eine perforierte Metallfolie. Die einzelnen Lagen der Metallfolie 14 sind bevorzugt versetzt zueinander angeordnet, wodurch ein besonders dichtes Metallgewebe erreicht ist, das besonders diffusionshemmend ist.

Das katalytische Element 1 mit einer weiteren alternativen Drosselschicht 10D ist in Figur 5 dargestellt. Dabei ist die Drosseischicht 10D aus einer mineralischen Schüttung gebildet. Die mineralische Drosselschicht 10D ist porös mit einer mittleren Korngröße von mindestens 0,3 mm und von höchstens 5 mm sowie mit einer Schichtdicke von mindestens 1 mm ausgebildet. Als mineralische Schüttung dient beispielsweise eine Basaltbruchschüttung.

Durch die verschieden besonders kleinvolumig, fein- und/oder grobporig ausgebildeten Drosselschichten 10, 10A bis 10D ist eine explosionstechnische Entkopplung des Inneren des katalytischen Elements 1 auch in hochexplosiver Umgebung, insbesondere in einer Umgebung mit einer besonders hohen Wasserstoff-Konzentration von mehr als 10 Vol.%, gegeben. Die Spaltweite der porösen Drosselschicht 10, 10A bis 10D ist im Auslegungsfall bei einer Wasserstoff-Konzentration von mehr als 10 Vol.% besonders eng, vorzugsweise kleiner 0,5 mm, zu wählen. Mit einer derartign engen Spaltweite ist darüber hinaus eine besonders sichere Flammensperre gegeben.

## Patentansprüche

1. Sicherheitsbehälter einer Kernkraftanlage mit einer Anzahl von katalytischen Elementen (1) zur Rekombination von Wasserstoff mit Sauerstoff als Reaktionsgase mit jeweils einem Katalysatorkörper (2) mit einer katalytischen Oberfläche (4), **dadurch gekennzeichnet, daß** eine auf der katalytischen Oberfläche (4) angebrachte poröse keramische, mineralische oder metallische, Drosselschicht (10, 10A bis 10D) zur Hemmung der Diffusion der zu- und/oder abströmenden Reaktionsgase, vorgesehen ist.

2. Sicherheitsbehälter nach Anspruch 1,
**dadurch gekennzeichnet, daß** die Drosselschicht (10, 10A bis 10D) eine Schichtdicke von mindestens 10 µm und höchstens 1 mm aufweist.

3. Sicherheitsbehälter nach Anspruch 1 oder 2,
**dadurch gekennzeichnet, daß** die Drosselschicht (10, 10A bis 10D) in Strömungsrichtung des Gasgemisches eine entlang dem Katalysatorkörper variierende Schichtdicke aufweist.

4. Sicherheitsbehälter nach Anspruch 3,
**dadurch gekennzeichnet, daß** die Drosselschicht (10, 10A, bis 10D) in einem Einströmbereich des Gasgemisches eine größere Schichtdicke aufweist als in einem Abströmbereich.

5. Sicherheitsbehälter nach einem der Ansprüche 1 bis 4,
**dadurch gekennzeichnet, daß** die Drosselschicht (10, 10A, bis 10D) in Strömungsrichtung des Gasgemisches einen durch die Drosselschicht variierenden mittleren Porendurchmesser aufweist.

6. Sicherheitsbehälter nach Anspruch 5,
**dadurch gekennzeichnet, daß** die Drosselschicht (10, 10A bis 10D) in einem Einströmbereich des Gasgemisches einen kleineren Porendurchmesser aufweist, als in einem Abströmbereich.

7. Sicherheitsbehälter nach einem der Ansprüche 1 bis 6,
**dadurch gekennzeichnet, daß** die Drosselschicht (10A bis 10B) keramisch ist und eine Schichtdicke von höchstens 500 µm aufweist.

8. Sicherheitsbehälter nach Anspruch 7,
**dadurch gekennzeichnet, daß** die keramische Drosselschicht (10A bis 10B) Aluminiumoxid oder Siliziumoxid umfaßt.

9. Sicherheitsbehälter nach einem der Ansprüche 1 bis 6,
**dadurch gekennzeichnet, daß** die Drosselschicht (10D) mineralische ist und eine Schichtdicke von mindestens 1 mm aufweist.

10. Sicherheitsbehälter nach Anspruch 9,
**dadurch gekennzeichnet, daß** die mineralische Drosselschicht (10D) aus einer mineralischen Schüttung, insbesondere aus einer Basaltbruchschüttung, mit einer mittleren Korngröße von mindestens 0,3 mm und von höchstens 5 mm gebildet ist.

11. Sicherheitsbehälter nach einem der Ansprüche 1 bis 6,
**dadurch gekennzeichnet, daß** die Drosselschicht (10C) me tallische ist und Metallfolie (14) umfaßt.

12. Sicherheitsbehälter nach einem der Ansprüche 1 bis 11,
**dadurch gekennzeichnet, daß** die Drosselschicht (10B, 10C) metallische oder keramische Fasern (13, 14) umfaßt, die netzartig angeordnet sind und vorzugsweise einen Durchmesser von höchstens 1 mm sowie einen mittleren Abstand von höchstens 2 mm aufweisen.

13. Sicherheitsbehälter nach einem der Ansprüche 1 bis 12,
**dadurch gekennzeichnet, daß** der Katalysatorkörper (2) ein Trägerblech, insbesondere aus einem nicht-rostenden Edelstahl, umfaßt.

14. Sicherheitsbehälter nach einem der Ansprüche 1 bis 13,
**dadurch gekennzeichnet, daß** der Katalysatorkörper (2) eine ebene Platte, eine perforierte Platte oder eine Kugel als mechanischen Träger umfaßt.

15. Sicherheitsbehälter nach einem der Ansprüche 1 bis 14,
**dadurch gekennzeichnet, daß** die katalytische Oberfläche (4) ein katalytisches Edelmetall (8), insbesondere Platin oder Palladium, umfaßt.

16. Sicherheitsbehälter nach einem der Ansprüche 1 bis 15,
**dadurch gekennzeichnet, daß** die katalytische Oberfläche (4) von einem mit Hilfe einer Haftvermittlerschicht und/oder einer Zwischenschicht (6) auf einen mechanischen Träger aufgetragenen katalytischen Material gebildet ist.

## Claims

1. Containment of a nuclear power plant having a number of catalytic elements (1) for the recombination of hydrogen with oxygen as reaction gases, each having a catalyst body (2) with a catalytic surface (4), **characterized in that** a porous ceramic, mineral or metallic restrictor layer (10, 10A to 10D) which has been applied to the catalytic surface (4) is provided for the purpose of inhibiting diffusion of the reaction gases flowing in and/or out.

2. Containment according to Claim 1, **characterized in that** the restrictor layer (10, 10A to 10D) has a layer thickness of at least 10 µm and at most 1 mm.

3. Containment according to Claim 1 or 2, **characterised in that** the restrictor layer (10, 10A to 10D) has a layer thickness which varies along the catalyst body in the direction of flow of the gas mixture.

4. Containment according to Claim 3, **characterized in that** the restrictor layer (10, 10A to 10D) has a greater layer thickness in an inflow region of the gas mixture than in an outflow region.

5. Containment according to one of Claims 1 to 4, **characterized in that** the restrictor layer (10, 10A to 10D) has a mean pore diameter which varies through the restrictor layer in the direction of flow of the gas mixture.

6. Containment according to Claim 5, **characterized in that** the restrictor layer (10, 10A to 10D) has a smaller pore diameter in an inflow region of the gas mixture than in an outflow region.

7. Containment according to one of Claims 1 to 6, **characterized in that** the restrictor layer (10A to 10B) is ceramic and has a layer thickness of at most 500 µm.

8. Containment according to Claim 7, **characterized in that** the ceramic restrictor layer (10A to 10B) comprises aluminium oxide or silicon oxide.

9. Containment according to one of Claims 1 to 6, **characterized in that** the restrictor layer (10D) is mineral and has a layer thickness of at least 1 mm.

10. Containment according to Claim 9, **characterized in that** the mineral restrictor layer (10D) is formed from a mineral bulk bed, in particular a bulk bed of basalt fragments, with a mean grain size of at least 0.3 mm and at most 5 mm.

11. Containment according to one of Claims 1 to 6, **characterized in that** the restrictor layer (10C) is metallic and comprises a metal foil (14).

12. Containment according to one of Claims 1 to 11, **characterized in that** the restrictor layer (10B, 10C) comprises metallic or ceramic fibres (13, 14) which are arranged in a mesh form and preferably have a diameter of at most 1 mm and a mean spacing of at most 2 mm.

13. Containment according to one of Claims 1 to 12, **characterized in that** the catalyst body (2) comprises a metal support sheet, in particular formed from a stainless steel.

14. Containment according to one of Claims 1 to 13, **characterized in that** the catalyst body (2) comprises a flat plate, a perforated plate or a ball as its mechanical support.

15. Containment according to one of Claims 1 to 14, **characterized in that** the catalytic surface (4) comprises a catalytic precious metal (8), in particular platinum or palladium.

16. Containment according to one of Claims 1 to 15, **characterized in that** the catalytic surface (4) is formed by a catalytic material that has been applied to a mechanical support with the aid of a bonding layer and/or an intermediate layer (6).

## Revendications

1. Enceinte de confinement d'une centrale nucléaire ayant un certain nombre d'éléments (1) catalytiques de recombinaison d'hydrogène à de l'oxygène comme gaz de réaction, ayant respectivement un corps (2) de catalyseur à surface (4) catalytique,
**caractérisée en ce qu'**il est prévu une couche (10, 10A à 10D) poreuse d'étranglement en céramique minérale ou métallique disposée sur la surface (4) catalytique pour minimiser la diffusion des gaz de réaction arrivant et/ou partant.

2. Enceinte de confinement suivant la revendication 1,
**caractérisée en ce que** la couche (10, 10A à 10D) d'étranglement a une épaisseur d'au moins 10 µm et d'au plus 1 mm.

3. Enceinte de confinement suivant la revendication 1 ou 2,
**caractérisée en ce que** la couche (10, 10A à 10D) d'étranglement a, dans la direction du courant du mélange gazeux, une épaisseur variant le long du corps du catalyseur.

4. Enceinte de confinement suivant la revendication 3,
**caractérisée en ce que** la couche (10, 10A à 10D) d'étranglement a, dans une zone d'entrée du mélange gazeux, une épaisseur plus grande que dans une zone de sortie.

5. Enceinte de confinement suivant l'une des revendications 1 à 4,
**caractérisée en ce que** la couche (10, 10A à 10D) d'étranglement a, dans la direction du courant du mélange gazeux, un diamètre de pore moyen qui varie à travers la couche d'étranglement.

6. Enceinte de confinement suivant la revendication 5,
**caractérisée en ce que** la couche (10, 10A à 10D) d'étranglement a, dans une zone d'entrée du mélange gazeux un diamètre de pore plus petit que dans une zone de sortie.

7. Enceinte de confinement suivant l'une des revendications 1 à 6,
**caractérisée en ce que** la couche (10A à 10B) d'étranglement est en céramique et a une épaisseur d'au plus 500 µm.

8. Enceinte de confinement suivant la revendication 7,
**caractérisée en ce que** la couche (10A à 10B) d'étranglement en céramique comprend de l'oxyde d'aluminium ou de l'oxyde de silicium.

9. Enceinte de confinement suivant l'une des revendications 1 à 6,
**caractérisée en ce que** la couche (10D) d'étranglement est minérale et a une épaisseur d'au moins 1 mm.

10. Enceinte de confinement suivant la revendication 9,
**caractérisée en ce que** la couche (10D) d'étranglement minérale est constituée d'un tas minéral, notamment d'un tas de fragments de basalte d'une granulométrie moyenne d'au moins 0,3 mm et d'au plus de 5 mm.

11. Enceinte de confinement suivant l'une des revendications 1 à 6,
**caractérisée en ce que** la couche (10C) d'étranglement est métallique et comprend un feuillard (14) métallique.

12. Enceinte de confinement suivant l'une des revendications 1 à 11,
**caractérisée en ce que** la couche (10B - 10C) d'étranglement comprend des fibres (13, 14) métalliques ou céramiques qui sont disposées suivant un filet et qui ont, de préférence, un diamètre d'au plus 1 mm, ainsi qu'un intervalle moyen d'au plus 2 mm.

13. Enceinte de confinement suivant l'une des revendications 1 à 12,
**caractérisée en ce que** le corps (2) de catalyseur comprend une tôle support, notamment en acier fin inoxydable.

14. Enceinte de confinement suivant l'une des revendications 1 à 13,
**caractérisée en ce que** le corps (2) de catalyseur comprend une plaque plane, une plaque perforée ou une bille en tant que support mécanique.

15. Enceinte de confinement suivant l'une des revendications 1 à 14,
**caractérisée en ce qu'**une surface (4) catalytique comprend un métal (8) précieux catalytique, notamment du platine ou du palladium.

16. Enceinte de confinement suivant l'une des revendications 1 à 15,
**caractérisée en ce que** la surface (4) catalytique est formée d'une matière catalytique portée sur un support métallique à l'aide d'une couche d'accrochage et/ou d'une couche (6) intermédiaire.
